# EUROPÄISCHE PATENTANMELDUNG

(11) **EP 1 553 690 A1**
(43) Veröffentlichungstag der Anmeldung: **13.07.2005**
(21) Anmeldenummer: 04290050.6
(22) Anmeldetag: 08.01.2004
(51) Int. Cl.: H02P 5/50

(54) **Verfahren, System und Motor zur Synchronisation der Drehzahl von mindestens zwei elektrischer Motoren**

(71) Anmelder: ALCATEL, 75008 Paris (FR)
(72) Erfinder: Jeske, Hardy, 79848 Bonndorf (DE)
(74) Vertreter: Brose, Gerhard

(57) **Zusammenfassung**

Die Erfindung betrifft ein Verfahren zur Synchronisation der Drehzahl eines elektrischen Motors (M2) auf die Drehzahl eines anderen elektrischen Motors (M1), wobei beide Motoren Sensoren (Se) zur Messung der Drehzahl oder des Drehwinkels, eine Steuereinheit (Contr) zur Drehzahlregelung und einen Signaleingang zum Anlegen eines Signals als Führungsgröße zur Drehzahlregelung aufweisen, bei dem Signale (Se) zur Drehzahlregelung eines führenden Motors (M1) als Führungsgröße zur Drehzahlregelung eines geführten Motors (M2) verwendet werden, sowie ein System mit mindestens zwei elektrischen Motoren und einen Elektrischen Motor hierfür.

## Beschreibung

Die Erfindung betrifft ein Verfahren zur Synchronisation der Drehzahl eines elektrischen Motors auf die Drehzahl eines anderen elektrischen Motors nach dem Oberbegriff des Anspruchs 1, ein System mit mindestens zwei elektrischen Motoren nach dem Oberbegriff des Anspruchs 7 und Elektrische Motoren hierfür nach dem Oberbegriff des Anspruchs 8.

Sowohl für die Automatisierung von Fertigungsanlagen als auch bei einer Vielzahl anderer Anwendungen werden elektrische Motoren benötigt, deren Drehzahlen aufeinander abgestimmt sind.

Ein einfaches Beispiel ist der Antrieb einer Jalousie oder eines Rolladens, der von zwei oder gar mehr Motoren aus gleichzeitig, etwa an beiden seitlichen Enden einer Welle, erfolgt.

Ein weiteres Beispiel ist der Transport von Ausgangs-, Zwischen- und Endprodukten in einer Fertigungsanlage. Hier muß an jeder Stelle sichergestellt sein, daß die ankommende Teileoder Materialmenge nicht größer ist als die abzutransportierende Teile- oder Materialmenge. Dies gilt auch dort, wo Teileoder Materialströme zusammenfließen oder sich teilen. Hier stehen die einzelnen Teilmengen zueinander und zur Gesamtmenge in einem vom Fertigungsprozeß bestimmten willkürlichen Verhältnis. Auch dies ist zu berücksichtigen. Wird hier nur eine grobe Anpassung vorgenommen, so daß die abtransportierbare Menge mit Sicherheit größer als die ankommende Menge ist, so kann es sein, daß entweder am Ende der Fertigungsanlage die Transportgeschwindigkeit zu groß ist, oder daß diese am Anfang nicht ausgelastet ist.

Es sind Lösungen bekannt, wenn auch nicht durch explizite Belege, bei denen eine Steuerzentrale Steuersignale für die Motoren vorgibt. Diese können für alle gleich oder auch aufeinander abgestimmt sein.

Der Erfindung liegt die Aufgabe zugrunde, eine Lösung anzugeben, die ohne eine solche Zentrale auskommt.

Diese Aufgabe wird erfindungsgemäß gelöst durch ein Verfahren nach der Lehre des Anspruchs 1, ein System mit mindestens zwei elektrischen Motoren nach der Lehre des Anspruchs 7 und einen Elektrischen Motor hierfür nach der Lehre des Anspruchs 8.

Es werden also Motoren mit Positionssensoren und Drehzahlregelung verwendet, wobei die Signale zur Drehzahlregelung eines Motors als Führungsgröße zur Drehzahlregelung eines weiteren Motors verwendet werden.

Weitere Ausgestaltungen der Erfindung sind den Unteransprüchen und der nachfolgenden Beschreibung zu entnehmen.

Im folgenden wird die Erfindung unter Zuhilfenahme der beiliegenden Zeichnungen weiter erläutert:

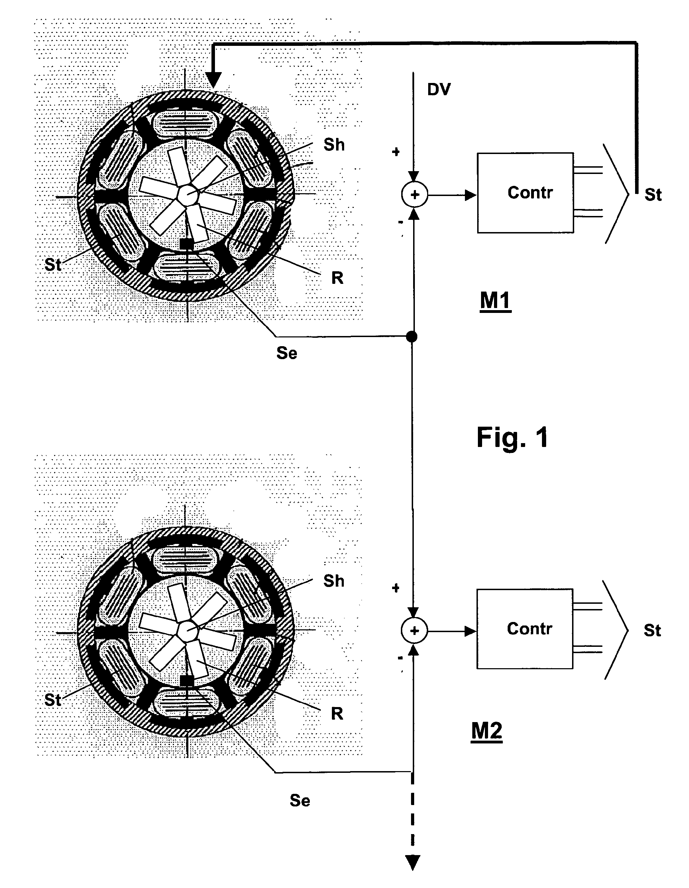

- Figur 1: zeigt ein Ausführungsbeispiel eines erfindungsgemäßen Systems mit zwei elektrischen Motoren, in dem das erfindungsgemäße Verfahren mit zwei erfindungsgemäßen Motoren durchgeführt werden kann.

Anhand der Figur 1 wird zunächst das beispielhafte System beschrieben:

Das System besteht hier aus zwei Motoren M1 und M2. Beide Motoren sind im wesentlichen gleich aufgebaut. Sie weisen beide einen elektromechanischen Teil auf, der hier jeweils links dargestellt ist, und einen Steuerteil, der hier jeweils rechts dargestellt ist. Beide Teile sind hier jeweils mittels eines Magnetfeldsensors Se gekoppelt. Üblicherweise ist der Steuerteil im selben Gehäuse mit untergebracht wie der elektromechanische Teil.

Der elektromechanische Teil ist hier jeweils durch eine Welle Sh (Shaft), einen Rotor R und einen Stator St dargestellt.

Die Wirkung des Rotors ist die einer Summe von, hier sechs, Permanentmagneten; er ist auch hier so dargestellt. Der Magnetfeldsensor Se kann damit ohne weitere Maßnahmen direkt ein Signal abgeben, das die augenblickliche Drehzahl wiedergibt. In der Zeichnung ist vereinfachend der Sensor Se und das von ihm abgegebene Signal mit dem gleichen Bezugszeichen gekennzeichnet.

Der Stator St besteht hier aus sechs Polen, die je eine nicht näher bezeichnete Wicklung tragen. Die Ansteuerung dieser Wicklungen, die hier statisch angeordnet sind, erfolgt nicht über Kommutatoren, sondern über elektronische Schalter, die von einer Steuerung aus gesteuert werden. Es handelt sich hier um bürstenlose Gleichstrommotoren.

Der Steuerteil ist hier jeweils durch eine Steuereinheit Contr, einen durch ein Plus-Zeichen im Kreis dargestellten Vergleicher und etwas Verschaltung dargestellt. Je nach verwendeter Technologie wird in der Praxis die Aufteilung anders sein.

Der Vergleicher bildet aus der Differenz aus einem Vorgabewert und dem jeweiligen, vom Sensor Se kommenden Istwert ein Fehlersignal, das auf den Eingang der zugehörigen Steuereinheit Contr gegeben wird. Der Vorgabewert für den ersten Motor M1 ist ein von außen vorgegebener Wert DV (desired value); der Vorgabewert für den zweiten Motor M2 ist der vom Sensor Se des ersten Motors kommende Istwert.

Das an die Steuereinheit Contr gegebene Fehlersignal wird in der Steuereinheit zur Bildung der Ansteuerströme für die Wicklungen des Stators St verwendet. Insoweit verhält sich die Erfindung nicht anders als übliche bürstenlose Gleichstrommotoren. Der Unterschied liegt darin, daß nur dem ersten Motor M1 ein Vorgabewert, hier DV, von außen vorgegeben wird, während dem zweiten Motor M2 der Istwert des ersten Motors als Vorgabewert zugeführt wird.

Die verwendeten Motoren können im wesentlichen gleich aufgebaut sein wie irgendein beliebiger bürstenloser Gleichstrommotor. Auch andere Motoren mit einer Drehzahlregelung, die auf einem Vergleich von Soll- und Istwert beruhen, können gleichermaßen verwendet werden. Die Verwendung von Schrittmotoren kann als Sonderfall hier gesehen werden.

Nahezu einzige Voraussetzung, die hierfür geschaffen werden muß, ist im Fall des führenden Motors die Schaffung eines Signalausgangs, an dem ein Signal zur Drehzahlregelung als Führungsgröße abnehmbar ist. In Figur 1 ist dies einerseits die Verbindung von Motor M1 zu Motor M2 und andererseits die gestrichelte Linie von Motor M2 nach unten; damit kann auch der Motor M2 als führender Motor für weitere Motoren verwendet werden.

Dieses als Führungsgröße dienende Signal ist im einfachsten Fall direkt das Ausgangssignal des Positionssensors, im Beispiel also des Hallsensors. Je nach Art der Ausführung der Steuereinheit zur Drehzahlregelung kann es aber sinnvoll sein, daß diese die Aufbereitung der Führungsgröße zumindest teilweise mit übernimmt, so daß der geführte Motor nicht speziell erfindungsgemäß angepaßt zu sein braucht.

Unter Umständen muß aber beim geführten Motor der Signaleingang zum Anlegen eines Signals als Führungsgröße zur Drehzahlregelung an den Signalausgang des führenden Motors angepaßt werden.

Besondere Vorteile ergeben sich, wenn als Soll- und Istwerte digitale Werte verwendet werden. Damit können einerseits problemlos beliebige Drehzahlverhältnisse eingestellt werden, andererseits können die eingestellten Drehzahlverhältnisse auch sehr genau eingestellt werden. Beispielsweise kann das Verhältnis so eingestellt werden, daß die Geschwindigkeit einer zweiten Fördereinrichtung sich von der einer ersten Fördereinrichtung gerade um ein oder zwei Prozent unterscheidet.

Die digitale Aufbereitung der Signale ist heute ohnehin schon deshalb erstrebenswert, weil auch andere Aufgaben oft digital durchgeführt werden. Dies erfolgt dann häufig auch programmgesteuert. Sofern zu diesem Zweck bereits eine Datenschnittstelle vorhanden ist, muß noch die Möglichkeit geschaffen werden, geeignete Steuersignale als Führungsgröße aufzunehmen oder abzugeben. Eine solche Datenschnittstelle kann auch mit optischen Signalen arbeiten, die weniger störanfällig sind als elektrische Signale.

Insbesondere bei der programmgesteuerten Signalaufbereitung brauchen verschiedene Parameter, etwa das Verhältnis der Drehzahlen von führendem zu geführtem Motor nicht fest vorgegeben zu sein, sondern können, sofern geeignete Dateneingänge vorhanden sind, entweder einmalig individuell eingegeben oder gar aktuellen Daten eines Fertigungsprozesses folgen, bei Bedarf angepaßt werden.

Das beschriebene Prinzip läßt sich, wie ohne weiteres einsehbar ist, problemlos auf mehrere Motoren ausdehnen. Je nach Problemstellung können dann zwei oder mehr Motoren gleichzeitig das Ausgangssignal des führenden Motors als Führungsgröße erhalten oder ein geführter Motor erhält das Ausgangssignal eines ebenfalls geführten Motors als Führungsgröße und gibt möglicherweise selbst wieder ein Ausgangssignal an einen weiteren geführten Motor.

In besonders gelagerten Fällen können auch andere als die internen Sensorsignale des führenden Motors als Führungsgröße für den geführten Motor verwendet werden. Beispielsweise kann das Signal auch erst nach einem nachgeschalteten Getriebe oder an der angetriebenen Einheit abgenommen werden. Es ist auch möglich, die Signale mehrerer Sensoren zu einem Führungssignal zusammenzuführen.

## Patentansprüche

1. Verfahren zur Synchronisation der Drehzahl eines elektrischen Motors (M2) auf die Drehzahl eines anderen elektrischen Motors (M1), wobei beide Motoren Sensoren (Se) zur Messung der Drehzahl oder des Drehwinkels, eine Steuereinheit (Contr) zur Drehzahlregelung und einen Signaleingang zum Anlegen eines Signals als Führungsgröße zur Drehzahlregelung aufweisen, **dadurch gekennzeichnet, daß** Signale (Se) zur Drehzahlregelung eines führenden Motors (M1) als Führungsgröße zur Drehzahlregelung eines geführten Motors (M2) verwendet werden.

2. Verfahren nach Anspruch 1, **dadurch gekennzeichnet, daß** als Führungsgröße zur Drehzahlregelung eines geführten Motors die von dem oder den Sensoren zur Messung der Drehzahl oder des Drehwinkels des führenden Motors verwendet werden.

3. Verfahren nach Anspruch 1, **dadurch gekennzeichnet, daß** als Führungsgröße zur Drehzahlregelung eines geführten Motors Signale verwendet werden, die im führenden Motor als Istsignal für die Drehzahlregelung verwendet werden.

4. Verfahren nach Anspruch 1, **dadurch gekennzeichnet, daß** das als Führungsgröße zur Drehzahlregelung eines geführten Motors verwendete Signal im führenden oder im geführten Motor derart aufbereitet wird, daß die Drehzahlen des führenden Motors und des geführten Motors in einem vorgegebenen Verhältnis stehen.

5. Verfahren nach Anspruch 1, **dadurch gekennzeichnet, daß** als Führungsgröße ein digitales Signal verwendet wird und die Aufbereitung digital erfolgt.

6. Verfahren nach Anspruch 1, **dadurch gekennzeichnet, daß** zur Aufbereitung erforderliche Parameter von außen vorgebbar sind.

7. System mit mindestens zwei elektrischen Motoren, die jeweils Sensoren zur Messung der Drehzahl oder des Drehwinkels und Mittel zur Drehzahlregelung aufweisen wobei jedes Mittel zur Drehzahlregelung einen Signaleingang aufweist, an dem ein Signal zur Drehzahlregelung als Führungsgröße anlegbar ist, **dadurch gekennzeichnet, daß** bei einem führenden Motor das Mittel zur Drehzahlregelung einen Signalausgang aufweist, an dem ein Signal zur Drehzahlregelung als Führungsgröße abnehmbar ist, und daß der Signalausgang des führenden Motors mit dem Signaleingang mindestens eines geführten Motors verbunden ist.

8. Elektrischer Motor mit mindestens einem Sensor zur Messung der Drehzahl oder des Drehwinkels und einem Mittel zur Drehzahlregelung das einen Signaleingang aufweist, an dem ein Signal zur Drehzahlregelung als Führungsgröße anlegbar ist, **dadurch gekennzeichnet, daß** das Mittel zur Drehzahlregelung einen Signalausgang aufweist, an dem ein Signal zur Drehzahlregelung als Führungsgröße abnehmbar ist.

9. Elektrischer Motor nach Anspruch 9, **dadurch gekennzeichnet, daß** es ein bürstenloser Gleichstrommotor ist, daß als Sensoren zur Messung der Drehzahl oder des Drehwinkels die für die Kommutierung erforderlichen Sensoren sind, und daß das Mittel zur Drehzahlregelung die Mittel zur Kommutierung enthält.
